# EUROPEAN PATENT SPECIFICATION

(11) **EP 0 465 877 B1**
(45) Date of publication and mention of the grant of the patent: **23.11.1994**
(21) Application number: 91109961.2
(22) Date of filing: 18.06.1991
(51) Int. Cl.: A47J 31/36

(54) **Espresso coffee machine**
Espresso-Kafeemaschine
Machine à café express

(30) Priority: 13.07.1990 IT 2093690
(43) Date of publication of application: 15.01.1992
(73) Proprietor: RANCILIO MACCHINE PER CAFFE' S.p.A., I-20010 Villastanza di Parabiago (Milano) (IT)
(72) Inventor: Ruggin, Remo, I-20023 Cerro Maggiore, (Milano) (IT); Allieri, Mario, I-20015 Parabiago (Milano) (IT)
(74) Representative: Liesegang, Roland, Dr.-Ing.

(56) References cited:
- EP-A- 0 201 656
- EP-A- 0 236 549
- EP-A- 0 328 704
- CH-A- 672 240
- DE-A- 3 521 989
- FR-A- 1 581 695
- FR-A- 2 483 762

## Description

This invention relates to domestic or professional espresso coffee machines intended to extemporarily brew coffee in cups, comprising one or more espresso coffee dispensing units fed by hot water and intended to convey, under control, a predetermined amount of the hot water in a chamber provided with a filter filled with ground or roasted coffee and from which the coffee infusion is delivered in one or two cups.

The espresso coffee machines of this type are normally provided with a steam boiler and a water pressurizing device. The steam boiler is intended to convey the infusion hot water (which generally must be at a temperature of 95-98°C) to the coffee dispensing units and to delivery also the steam for preparing other hot beverages. For this reason the steam boiler is compulsory kept at a temperature over 100°C, generally at a temperature of 120°C.

For an optimal production of the coffee infusion it has proved necessary to keep the coffee dispensing units at a temperature which is approximatively equal to the infusion temperature and, in order to maintain in the infusion chamber and in the espresso coffee dispensing unit(s) constant temperature conditions both during the intermittent infusion and during the continuous infusion, various indirect heating systems of the infusion chamber and the coffee dispensing unit(s) have been proposed. These systems operate in different manners, namely:
1) by means of closed circuit hot water thermosyphon circulation systems through a heat exchanger located in the steam boiler;
2) by means of thermosyphon circulation systems using the hot water of the boiler;
3) by means of direct or indirect conduct ion of the heat from the water or the steam boiler body.

The espresso coffee machine to which these technical solutions for maintaining the temperature of the coffee dispensing unit(s) constant have been applied is affected by difficulties in maintaining the ideal work thermal conditions because the heat balance between coffee dispensing unit in a rest condition and coffee dispensing unit in the intermittent or continuous brewing of the coffee is continuously broken by the water coming from the boiler or the heat exchanger, which water has a temperature higher than the desired temperature and therefore can give rise to undesired changes in the appearance and taste of the dispensed beverage (overheated coffee).

As a matter of fact, since the water delivered from the steam boiler is at a temperature over 100°C and the optimal infusion temperature is at the contrary slightly lower than 100°C, by means of these systems an overheating of the coffee dispensing unit(s) is obtained, especially when they are operating in a continuous manner, so that they reach a too high temperature which causes said changes in the appearance and taste of the dispensed beverage.

FR-A-2483761 discloses an espresso coffe machine comprising one or more coffee dispensing units having a chamber provided with a filter to be filled with coffee powder, a hot water boiler for heating water to the correct temperature of the coffee infusione and valving means for feeding the hot water coming from said hot water boiler to the respective coffee dispensing unit during the infusion step and for discharging the pressure formed in said filter chamber at the end of the infusion step.

The aim of the present invention is to provide an improved espresso coffee machine, wherein the system for maintaining at the correct temperature the coffee dispensing unit(s) is independent from other kinds of heat generating devices (boiler; heat exchangers and so on).

More particularly, the espresso coffee machine according to the present invention is of the type including one or more coffee dispensing units having a chamber provided with a filter to be filled with coffee powder, a hot water boiler for heating water to the correct temperature of the coffee infusion and valving means for feeding the hot water coming from said hot water boiler to the respective coffee dispensing unit during the infusion step and for discharging the pressure formed in the filter chamber at the end of the infusion step and is characterized in that it comprises:
- an electrical heater located in the coffee dispensing unit or in each coffee dispensing unit and intended to keep said units to the correct coffee infusion temperature independently from the temperature of the water coming from said hot water boiler.

Preferably, said hot water boiler and the coffee dispensing unit or each coffee dispensing unit is provided with separate control means for maintaining the water at the correct infusion temperature.

Advantageously, control means for controlling the hot water amount necessary for the preparation of the espresso coffee are associated to the coffee dispensing unit(s).

Suitably, the espresso coffee machine includes a superheater connected to said hot water boiler and intended to produce the steam necessary for heating other beverages or for preparing hot milk or milk cream for the cappuccino, said superheater receiving the hot water from the hot water boiler and transforming it into steam to be delivered through a special spout.

Advantageously, when the hot water and steam requirements are very important, in said espresso coffee machine a conventional steam boiler is provided to be used only and exclusively for the auxiliary services of the machine.

By means of this system for producing the coffee infusion provided with coffee dispensing unit(s) and hot water boiler independent from each other it is possible to separately control the temperature of the coffee dispensing unit(s) and the temperature of the infusion water so that the correct temperature necessary for the best exploitement of the organoleptic characteristics of the coffee infusion can be maintained during the different working modes, i.e. intermittent or continuous mode.

The present invention will be now described in more detail by way of example in connection with a preferred embodiment, illustrated in the accompanying drawing wherein:

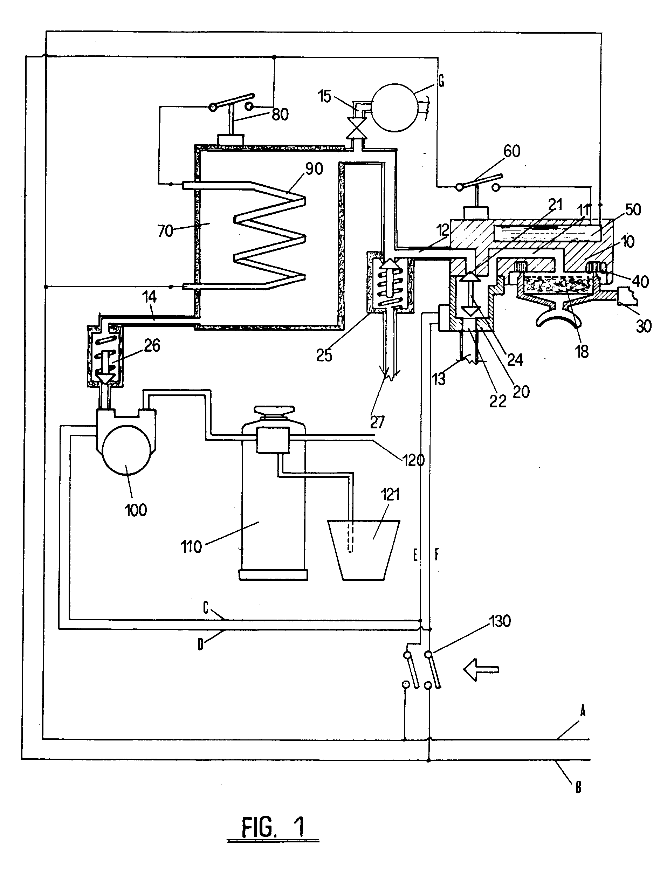

Fig. 1 diagrammatically shows the hot water boiler for producing the infusion hot water and one coffee dispensing unit according to the present invention.

In the drawing there is shown a hot water boiler 70 for producing the infusion hot water which generally is at a temperature ranging from 95°C to 98°C. This hot water boiler is fed by the cold water coming from a water system 120 or else from a special tank 121 and which can be softened by passing it in a softener (not shown) or by treating it in a water conditioner 110. The so treated cold water is fed by a pump 100 through a check valve 26 to the inlet 14 of the hot water boiler 70 until it is full. The hot water boiler 70 is heated by an electric heater 90 per se known, f.i., an electric resistance, and the hot water flows from the top of the hot water boiler through a conduit 12 connected to the coffee dispensing unit 10 and in which a safety valve 25 is arranged which is provided with a discharge conduit 27 acting as a safety device in the occurrence of overpressures in the hot water boiler 70. The temperature of the hot water is controlled by a thermostat 80 controlling the supply of electric power to the heater 90.

The coffee dispensing unit 10 comprises a body in which valve seats for an electric coffee dispensing control valve 20 are provided, the housing for receiving the filter holder 30, a gasket 40, a heater 50 and a temperature control thermostat 60. Here again the heater 50 is per se known, f.i. an electric resistance.

The electric control valve 20 is a solenoid valve provided with two opposite valve seats 21,22 which are alternatively closed by the solenoid plunger 24 so that when the plunger 24 closes the valve seat 21 the valve seat 22 is automatically opened. When the electric solenoid valve 20 is energized, the solenoid plunger 24 opens the valve seat 21 and closes the valve seat 22, thereby communicating the oulet 12 of the hot water boiler 70 with the infusion chamber 18 of the filter holder 30 through the conduit 11 provided in the coffee dispensing unit 10. When the electric control valve 20 is deenergized, the solenoid plunger 24 closes the valve seat 21 and opens the valve seat 22 thereby communicating the infusion chamber 18 with a discharge pipe 13 through the conduit 11 for discharging the residual pressure from the infusion chamber in order to permit the removal of the filter holder 30 for setting the machine for a new coffee dispensing operation.

The system is power supplied as illustrated in the drawing so as to cause the hot water boiler 70 to be separately heated through the electric heater 90 and the heating is controlled by a thermostat 80 which can be fixedly or controllably calibrated, whereas the coffee dispensing unit 10 is maintained at the correct infusion temperature by the heat provided by the electric heater 50 and controlled by the thermostat 60 which can be also fixedly or controllably calibrated.

As can be seen from the electric circuit shown in the Figure, one end of the electric heater 90 of the hot water boiler 70 and one end of the electric heater 50 of the coffee dispensing unit 10 are connected via the electric line A to the electric network, whereas the other end of the electric heater 90 of the hot water boiler 70 and the other end of the electric heater 50 of the coffee dispensing unit 10 are connected via the electric line B to the network through the thermostat 80, and the thermostat 60, respectively. Therefore, the heaters are always under current even if the espresso coffee machine is at rest.

The operation of the espresso coffee machine according to the present invention is as follows.

By switching on the two-pole switch 130, both the pump 100 through the lines C and D and the electric valve 20 for dispensing the coffee infusion through the electric lines E and F are energized. The energization of the electric valve 20 causes its solenoid plunger 24 to open the valve seat 21 and to close the valve seat 22 so that the pump 100 delivers the hot water in the hot water boiler 70 at the infusion temperature to the coffee dispensing unit 10 through the conduit 12 and the conduit 11. The coffee dispensing unit 10 is at the correct infusion temperature controlled by the thermostat 60 because it is permanently heated by the electric heater 50 so that the hot water coming from the hot water boiler 70 is regulated at the correct infusion temperature even if this water is in the coffee dispensing unit 10. Once the desired amount of dispensed coffee infusion is reached, the switch 130 is switched off, so that the pump 100 and the electric valve 20 are deenergized and the solenoid plunger 24 of the electric valve closes the valve seat 21 and opens the valve seat 22, thereby preventing the hot water from flowing from the hot water boiler 70 to the coffee dispensing unit 10 and communicating the discharge conduit 13 with the infusion chamber 18, so that the pressure existing in this infusion chamber 18 can be discharged through the conduit 11. This permits the filter holder 30 of the coffee dispensing unit 10 to be removed in order to prepare a new coffee infusion.

The correct heat balance of the system is maintained by the exact balance determined by the temperatures to which the thermostat 60 in the coffee dispensing unit 10 and the thermostat 80 in the hot water boiler 70 have been regulated.

Althought in the drawing a coffee dispensing unit only has been illustrated, as in the case of domestic espresso coffee machine, it is apparent that the hot water boiler can feed a plurality of coffee dispensing units 10, as in the case of professional espresso coffee machines, which coffee dispensing units are all separately heated at the correct infusion temperature.

While in the drawing electromechanical means for regulating the machine has been illustrated, it is apparent that it also electronic means can be provided for regulating the machine, possibly even with a microprocessor without departing from the scope of the present invention.

With the hot water boiler 70 and the coffee dispensing unit 10 being separately heated it is possible to keep the correct temperature necessary for the best exploitation of the organoleptic characteristics of the coffee infusion to the different working modes, i.e. intermittently or continuously. In fact, there is no longer the danger that the coffee dispensing unit is overheated by the water at a temperature of 120°C coming from the conventional steam boiler or else by the heat exchangers provided for heating the coffee dispensing unit and therefore an overheated coffee infusion is not produced, as occurred till now.

Obviously, all the temperature controll functions of the various coffee dispensing units and the hot water boiler can be controlled separately and unit by unit through electromechanic thermostats which can be fixedly or controllably calibrated or else electronically by means of temperature sensors located in the hot water boiler and in the respective coffee dispensing unit as a function of the working mode and the coffee infusion characteristics required by the user. All the temperature control and regulation systems of the espresso coffee machine, can form also part of a general microprocessor control system controlling the functions of the espresso coffee machine (see Italian Patent 1.164.346).

Furthermore, by using the espresso coffee machines to which coffee dispensing units having an independent temperature regulation have been applied, it is possible to obtain hot water for producing other hot beverages by taking it from the hot water boiler by means of a mechanical control with tap or by means of an electrical or electronical control with electric valve.

Also the tapped hot water amount can be manually controlled by the user or can be preregulated and metered by means of electronic systems.

If there is the necessity of tapping steam, for example for heating beverages or for preparing hot milk or milk cream for the cappuccino, the espresso coffee machine according to the present invention can include also a superheater G per se known which is connected to the hot water boiler 70 via the conduit 15 and in which the hot water is instantaneously transformed into steam and delivered through the special spout of the espresso coffee machine.

Of course, when the hot water and steam requirements are very important, it is preferred to include in the espresso coffee machine according to the present invention a steam boiler to be used only and esclusively for the auxiliary services of the machine.

The temperature balance can be maintained also by limiting the electric power supply to the various heaters in order to avoid that the preset temperature limit can be overcome by the inertia of the hot mass of the heater itself. By this system the temperature set value is that of the balance to which the system can reach.
The espresso coffee machine according to the present invention offers the great advantage of the best use of the coffee mixture because the heat balance is attained indipendently from the hot water boiler, in that the coffee dispensing unit and the hot water boiler are separately heated.

Another advantage results from the fact that a coffee infusion maintaining the organoleptic characteristics of the coffee can be obtained because the coffee infusion is not overheated.

Still another advantage is to avoid an overheating of the coffee dispensing unit(s) which would cause undesired changes in the appareance and taste of the dispensed coffee infusion.

## Claims

1. Espresso coffee machine comprising one or more coffee dispensing units (10) having a chamber (18) provided with a filter to be filled with coffee powder, a hot water boiler (70) for heating water to the correct temperature of the coffee infusion and valving means (20,24,25) for feeding the hot water coming from said hot water boiler (70) to the respective coffee dispensing unit (10) during the infusion step and for discharging the pressure formed in said filter chamber (18) at the end of the infusion step, characterized in that it comprises:
- an electrical heater (50) located in said coffee dispensing unit (10) or in each coffee dispensing unit (10) and intended to keep said unit(s) (10) at the correct coffee infusion temperature independently from the temperature of the water coming from said hot water boiler (70).

2. Espresso coffee machine according to claim 1, characterized in that said hot water boiler (70) and said coffee dispensing unit (10) or each coffee dispensing unit (10) are provided with separate control means for keeping the water at the correct infusion temperature.

3. Espresso coffee machine according to claim 2, characterized in that said separate control means of said hot water boiler (70) and said coffee dispensing unit (10) or each coffee dispensing unit (10) are electromechanical control means.

4. Espresso coffee machine according to claim 3, characterized in that said separate control means of said hot water boiler (70) and said coffee dispensing unit (10) or each coffee dispensing unit (10) are thermostats (60,80).

5. Espresso coffee machine according to claim 2, characterized in that said control means of said hot water boiler (70) and said coffee dispensing unit (10) or each coffee dispensing unit (10) are electronic means.

6. Espresso coffee machine according to claim 5, characterized in that said control means of said hot water boiler (70) and said coffee dispensing unit (10) or each coffee dispensing unit (10) are temperature sensors.

7. Espresso coffee machine according to claims 2 to 6, characterized in that said control means of the temperature of said coffee dispensing units (10) are provided on each coffee dispensing unit (10).

8. Espresso coffee machine according to claims 2 to 6, characterized in that said control means of the temperature of said coffee dispensing units (10) control all the coffee dispensing units (10).

9. Espresso coffee machine according to anyone of the preceeding claims, characterized in that means for regulating the hot water amount necessary for preparing the espresso coffee are associated to the coffee dispensing unit(s) (10).

10. Espresso coffee machine according to anyone of the preceeding claims, characterized in that it comprises a superheater (G) connected to said hot water boiler (70) and intended to provide the steam necessary for heating other beverages or for preparing hot milk or milk cream for the cappuccino, said superheater (G) receiving the hot water from said hot water boiler (70) and transforming it in steam to be delivered through a special spout of the machine.

11. Espresso coffee machine according to anyone of the preceeding claims, characterized in that when the hot water and steam requirements are very important, inside the machine a conventional steam boiler to be used only and esclusively for the ausiliary services of the machine is provided.

## Patentansprüche

1. Espresso-Kaffeemaschine bestehend aus einer oder mehreren Kaffeeausgabeeinheiten (10) mit einer mit einem Filter versehenen Kammer (18), die mit Kaffeemehl zu füllen ist, einem Boiler (70) zum Erhitzen von Wasser auf die korrekte Temperatur des Kaffeeaufgusses und Ventilen (20,24,25), um das vom Boiler (70) kommende erhitzte Wasser der entsprechenden Kaffeeausgabeeinheit (10) während der Aufgußphase zuzuführen und um den in der Filterkammer (18) gebildeten Druck am Ende der Aufgußphase abzuleiten, dadurch gekennzeichnet, daß die Maschine
- einen elektrischen Heizer (50), der in der Kaffeeausgabeeinheit (10) oder in jeder Kaffeeausgabeeinheit (10) angeordnet ist und diese Einheit (-en) (10) auf der korrekten Kaffeeaufgußtemperatur hält, unabhängig von der Temperatur des aus dem Boiler (70) kommenden Wassers, enthält.

2. Espresso-Kaffeemaschine nach Anspruch 1, dadurch gekennzeichnet, daß der Boiler (70) und die Kaffeeausgabeeinheit (10) oder jede Kaffeeausgabeeinheit (10) mit getrennten Reguliermitteln versehen sind, um das Wasser auf der korrekten Aufgußtemperatur zu halten.

3. Espresso-Kaffeemaschine nach Anspruch 2, dadurch gekennzeichnet, daß die getrennten Reguliermittel des Boilers (70) und der Kaffeeausgabeeinheit (10) oder jeder Kaffeeausgabeeinheit (10) elektromechanische Mittel sind.

4. Espresso-Kaffeemaschine nach Anspruch 3, dadurch gekennzeichnet, daß die getrennten Reguliermittel des Boilers (70) und der Kaffeeausgabeeinheit (10) oder jeder Kaffeeausgabeeinheit (10) Thermostate (60,80) sind.

5. Espresso-Kaffeemaschine nach Anspruch 2, dadurch gekennzeichnet, daß die Reguliermittel des Boilers (70) und der Kaffeeausgabeeinheit (10) oder jeder Kaffeeausgabeeinheit (10) elektronische Mittel sind.

6. Espresso-Kaffeemaschine nach Anspruch 5, dadurch gekennzeichnet, daß die Reguliermittel des Boilers (70) und der Kaffeeausgabeeinheit (10) oder jeder Kaffeeausgabeeinheit (10) Temperatursensoren sind.

7. Espresso-Kaffeemaschine nach Anspruch 2 - 6, dadurch gekennzeichnet, daß die Temperaturreguliermittel der Kaffeeausgabeeinheiten (10) in jeder Kaffeeausgabeeinheit (10) vorgesehen sind.

8. Espresso-Kaffeemaschine nach Anspruch 2 - 6, dadurch gekennzeichnet, daß die Temperaturreguliermittel der Kaffeeausgabeeinheiten (10) alle Kaffeeausgabeeinheiten (10) regulieren.

9. Espresso-Kaffeemaschine nach irgendeinem der vorausgehenden Ansprüche, dadurch kennzeichnet, daß der Kaffeeausgabeeinheit (-en) (10) Mittel zum Regulieren der Heißwassermenge, die für die Espressokaffeebereitung nötig ist, zugeordnet sind.

10. Espresso-Kaffeemaschine nach irgendeinem der vorausgehenden Ansprüche, dadurch gekennzeichnet, daß sie einen Überhitzer (G) enthält, der mit dem Boiler (70) verbunden und dafür vorgesehen ist, den zum Erhitzen von anderen Getränken oder zur Bereitung von heißer Milch oder Milchkrem für den Kapuccino notwendigen Dampf zu liefern, wobei der Überhitzer (G) das heiße Wasser aus dem Boiler (70) erhält und es in Dampf umwandelt, der durch eine eigene Auslaßdüse an die Maschine abgegeben wird.

11. Espresso-Kaffeemaschine nach irgendeinem der vorausgehenden Ansprüche, dadurch gekennzeichnet, daß, wenn ein großer Bedarf an Heißwasser und Dampf besteht, in der Maschine ein üblicher Dampfboiler vorgesehen ist, der einzig und alleine für die Hilfsdienste der Maschine verwendet werden darf.

## Revendications

1. Machine à café express comportant un ou plusieurs groupes de percolation (10) ayant une chambre (18) pourvue d'un filtre destiné à recevoir une charge de café en poudre, une chaudière (70) pour chauffer l'eau à la température correcte de l'infusion de café, et des soupapes (20,24,25) pour alimenter l'eau chaude qui viens de cette chaudière (70) au groupe de percolation relatif (10) pendant la phase d'infusion et pour décharger la pression formée dans ladite chambre à filtre (18) à la fin de la phase d'infusion, caractérisée en ce que la machine comporte:
- un réchauffeur électrique (50) arrangé dans ledit groupe de percolation (10) ou dans chaque groupe de percolation (10) et destiné à maintenir ledit groupe ou lesdits groupes (10) à la correcte température d'infusion de café n'importe quelle soit la température de l'eau arrivant de cette chaudière (70).

2. Machine à café express selon la revendication 1, caractérisée en ce que ladite chaudiére (70) et ledit groupe de percolation (10) ou chaque groupe de percolation (10) sont pourvus des moyens de contrôle pour maintenir l'eau à la température d'infusion correcte.

3. Machine à café express selon la revendication 2, caractérisée en ce que lesdits moyens de contrôle séparés de cette chaudière (70) et dudit groupe de percolation (10) ou de chaque groupe de percolation (10) sont des moyens de contrôle électromechaniques.

4. Machine à café express selon la revendication 3, caractérisée en ce que lesdits moyens de contrôle de ladite chaudière (70) et dudit groupe de percolation (10) ou de chaque groupe de percolation (10) sont des thermostats (60,80).

5. Machine à café express selon la revendication 2, caractérisée en ce que lesdits moyens de contrôle de ladite chaudière (70) et dudit groupe de percolation (10) ou de chaque groupe de percolation (10) sont des moyens électronique.

6. Machine à café express selon la revendication 5, caractérisée en ce que lesdits moyens de contrôle de ladite chaudière (70) et dudit groupe de percolation (10) ou de chaque groupe de percolation (10) sont des capteurs de température.

7. Machine à café express selon les revendications 2 - 6, caractérisée en ce que lesdits moyens de contrôle de la température desdits groupes de percolation (10) sont prévus dans chaque groupe de percolation (10).

8. Machine à café express selon les revendications 2 - 6, caractérisée en ce que lesdits moyens de contrôle de la température desdits groupes de percolation (10) contrôlent tous les groupes de percolation (10).

9. Machine à café express selon l'une quelconque des revendications précédentes, caractérisée en ce que des moyens pour régler la quantité d'eau chaude nécessaire pour préparer le café expresso sont associés au groupe ou groupes de percolation (10).

10. Machine à café express selon l'une quelconque des revendications précédentes, caractérisée en ce qu'elle comporte un surchauffeur (G) relié à ladite chaudière (70) et destiné à fournir la vapeur nécessaire pour réchauffer d'autres boissons ou pour préparer du lait chaud ou du crème de lait pour le cappuccino, ledit surchauffeur (G) recevant l'eau chaude de ladite chaudière (70) et la transformant en vapeur destinée à être alimentée à travers un tube de débite de la machine.

11. Machine à café express selon l'une quelconque des revendications précédentes, caractérisée en ce que dans le cas où la demande de l'eau chaude et de la vapeur est très importante, il est prévu à l'interieure de la machine une chaudiére de vapeur destinée à être utilisée seulement et exclusivement pour les services auxiliaires de la machine.
